(19) Europäisches Patentamt
European Patent Office
Office européen des brevets

(11) **EP 2 371 589 B1**

(12) **EUROPÄISCHE PATENTSCHRIFT**

(45) Veröffentlichungstag und Bekanntmachung des Hinweises auf die Patenterteilung:
**05.09.2012 Patentblatt 2012/36**

(51) Int Cl.:
***B60H 1/22*** *(2006.01)*   ***F24H 9/20*** *(2006.01)*
***H05B 1/02*** *(2006.01)*

(21) Anmeldenummer: **10003264.8**

(22) Anmeldetag: **26.03.2010**

(54) **Elektrische Heizvorrichtung**

Electric heating device

Dispositif de chauffage électrique

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(43) Veröffentlichungstag der Anmeldung:
**05.10.2011 Patentblatt 2011/40**

(73) Patentinhaber: **Eberspächer catem GmbH & Co. KG**
**76863 Herxheim (DE)**

(72) Erfinder:
• **Emanuel, Dieter**
**76855 Annweiler (DE)**

• **Reiss, Holger**
**76764 Rheinzabern (DE)**

(74) Vertreter: **Grünecker, Kinkeldey, Stockmair & Schwanhäusser**
**Leopoldstrasse 4**
**80802 München (DE)**

(56) Entgegenhaltungen:
**EP-A2- 1 157 868        WO-A2-2005/000608**
**DE-A1-102008 056 757    FR-A1- 2 790 339**

**Beschreibung**

Die vorliegende Erfindung betrifft eine elektrische Heizvorrichtung für ein Kraftfahrzeug. Die vorliegende Erfindung betrifft insbesondere eine elektrische Heizvorrichtung, die speziell geeignet ist für ein Kraftfahrzeug, dessen Antriebseinheit keine ausreichende Abwärme zur Erwärmung oder Klimatisierung des Fahrgastinnenraums abgibt. Dies ist zum Beispiel bei Fahrzeugen mit Elektro- oder Hybridantrieb der Fall.

Eine entsprechende Heizvorrichtung muss sich deshalb dazu eignen, sowohl den Innenraum des Kraftfahrzeugs mit der erforderlichen Heizwärme zu versorgen, als auch die für die ablaufenden Prozesse in einzelnen Anlagenteilen des Kraftfahrzeugs erforderliche oder zumindest diese fördernde Wärme bereitzustellen, wie zum Beispiel zur Vorwärmung des Fahrzeugakkumulators.

Es ist im Stand der Technik bekannt, für diese Zwecke sogenannte Widerstandsheizelemente oder PTC (positive temperature coeffizient)-Heizelemente einzusetzen. Diese sind selbstregelnd, da sie mit zunehmender Erwärmung einen höheren Widerstand zeigen, und somit bei gleicher Spannung eine geringere Menge an Strom durchlassen. Die selbstregelnden Eigenschaften der PTC-Heizelemente verhindern somit eine Überhitzung.

Dementsprechend werden PTC-Heizelemente regelmäßig in Radiatoren eingesetzt, die insbesondere der Erwärmung des Fahrgastinnenraumes bei solchen Fahrzeugen dienen, deren Antrieb keine ausreichende Prozesswärme zur Klimatisierung oder Heizung des Fahrzeuginnenraums abgibt. Bei Hybridfahrzeugen kann eine PTC-Heizvorrichtung auch als Zuheizer in den Phasen, in denen der Verbrennungsmotor nicht läuft (zum Beispiel an der Ampel oder im Stau) eingesetzt werden.

Die Luft im Fahrgastinnenraum wird mit Hilfe der PTC-Widerstandsheizelemente entweder direkt (Luftheizung) oder indirekt über einen Warmwasserkreislauf, in dem warmes Wasser durch Radiatoren strömt (Warmwasserheizung), erwärmt. In beiden Fällen wird unmittelbar durch die Heizelemente ein strömendes Fluid, das heißt ein flüssiges oder gasförmiges Medium, erwärmt: vorzugsweise Wasser oder Luft.

Ein Beispiel für eine elektrische PTC- Heizung mit einer Mehrzahl von Heizelementen für ein Kraftfahrzeug ist aus DE 198 45 401 A1 bekannt. Bei einem Heizelement ist die Heizleistung mit einer PWM- Ansteuerung kontinuierlich einstellbar, bei allen anderen Heizelementen ist sie nur binär vollständig zu- oder abschaltbar.

Druckschrift DE 10 2008 056 757 A1 beschreibt ein elektrisches Zusatzheizsystem für ein Fahrzeug, bei dem eine Leistungsregelung über PWM eines Stroms erfolgt. Die Heizvorrichtung verfügt über eine unmittelbar an eine Heizeinrichtung angeschlossene Stromdetektionseinheit zum Messen eines Stroms in der Heizeinrichtung. Die Steuerung erfolgt so, dass ein PWM-Tastverhältnis von einer Steuereinheit entsprechend einem vorgegebenen Leistungssollwert eingestellt wird. Der Heizleistungssollwert hängt von einer Batteriespannung ab und ist nach oben begrenzt (Pmax). Für die Berechnung wird eine lineare Abhängigkeit zwischen Leistungssollwert und Bezugsspannung angesetzt.

Um vorhandene Leistungsreserven im Bordnetz eines Kraftfahrzeugs optimal ausnutzen zu können, ist es wünschenswert, eine elektrische Heizvorrichtung so anzusteuern, dass die Heizleistung möglichst genau an eine Leistungsvorgabe angepasst wird. Dies gilt insbesondere für Fahrzeuge mit Elektroantrieb, bei denen die Energie für den Fahrzeugantrieb und die elektrische Heizung aus der gleichen Quelle gespeist werden, so dass zwischen dem Aktionsradius und der verfügbaren Heizenergie ein unmittelbarer Zusammenhang besteht.

Eine bei niedrigen Bordnetzspannungen (z.B. im automobiltechnischen Niedervoltbereich von ca. 12 Volt oder ca. 24 Volt) anwendbare lineare Leistungsansteuerung, basierend auf PWM (pulse width modulation - Pulsbreitenmodulation) funktioniert so, dass die elektrische Heizung mit einem Tastverhältnis proportional zur Leistungsanforderung angesteuert wird. Sollen zum Beispiel 50% der von einer Heizstufe maximal erzielbaren Leistung erreicht werden, so wird die Heizstufe mit einem Tastverhältnis von 50% angesteuert; bei 70% Leistungsanforderung sind es 70%.

Die Bordnetzspannung in Hybrid- oder Elektrofahrzeugen liegt bei bis zu 500 Volt und somit - automobiltechnisch gesehen - im Hochvoltbereich. Im Spannungsbereich einiger 100 V ist das Tastverhältnis nicht mehr der Leistung proportional. Zum Beispiel können bei 40% Tastverhältnis schon 80% der Maximalleistung einer Heizstufe erreicht werden. Deshalb ist die oben beschriebene einfache Ansteuerung nicht ohne weiteres auf den automobiltechnischen Hochvoltbereich übertragbar.

Es ist Aufgabe der vorliegenden Erfindung, eine elektrische Heizvorrichtung zur Erwärmung von Fluiden für ein Kraftfahrzeug, insbesondere mit Elektroantrieb, bei der die Heizleistung auf einfache und robuste Weise feinstufig auf eine vorgegebene Leistungsanforderung eingestellt werden kann, sowie ein entsprechendes Einstellverfahren, bereitzustellen.

Diese Aufgabe wird durch eine elektrische Heizvorrichtung mit den Merkmalen des Anspruchs 1 und ein Verfahren mit den Merkmalen des Anspruchs 15 gelöst.

Gemäß einem ersten Aspekt der vorliegenden Erfindung wird eine elektrische Heizvorrichtung zur Erwärmung von Fluiden für ein Kraftfahrzeug, insbesondere mit Elektroantrieb, bereitgestellt.

Gemäß einem ersten Aspekt der vorliegenden Erfindung wird eine elektrische Heizvorrichtung zur Erwärmung von Fluiden für ein Kraftfahrzeug, insbesondere mit Elektroantrieb, bereitgestellt. Die Heizvorrichtung umfasst eine elektrische Heizstufe mit einem oder mehreren Heizelementen. Weiterhin umfasst die Heizvorrichtung eine Steuereinrichtung zum feinstufigen Einstellen einer Heizleistung über eine Modulation des durch die Heizstufe fließenden Stroms. Die Heizvorrichtung umfasst weiterhin einen nichtflüchtigen Speicher zum Abspeichern einer Zuordnungstabelle, die jeder Leistungsstufe einer Mehrzahl vorgegebener Leistungsstufen eine Zeitdauer für die Ansteuerung der elektrischen Heizstufe zuordnet. Die Steuereinrichtung aktiviert zur Einstellung der Heizleistung der elektrischen Heizstufe den Stromfluss durch die elektrische Heizstufe innerhalb eines vorgegebenen Taktrahmens für die einer Leistungsstufe in der Zuordnungstabelle zugeordnete Zeitdauer.

Gemäß einem zweiten Aspekt der vorliegenden Erfindung wird ein Verfahren zum Ansteuern einer elektrischen Heizvorrichtung, die eine elektrische Heizstufe mit einem oder mehreren Heizelementen zur Erwärmung von Fluiden in einem Kraftfahrzeug umfasst, bereitgestellt. Die Heizleistung wird feinstufig über eine Modulation des durch die Heizstufe fließenden Stroms eingestellt. Der Stromfluss durch die elektrische Heizstufe wird jeweils für eine vorgegebene Zeitdauer innerhalb eines vorgegebenen Taktrahmens aktiviert. Die vorgegebene Zeitdauer ist eine aus einer Mehrzahl in einem nichtflüchtigen Speicher abgespeicherten Zeitdauern. In dem nichtflüchtigen Speicher ist jeder Leistungsstufe einer Mehrzahl vorgegebener Leistungsstufen eine Zeitdauer für die Ansteuerung der elektrischen Heizstufe zugeordnet.

Es ist der besondere Ansatz der vorliegenden Erfindung, eine Heizvorrichtung speziell für den Kraftfahrzeug- Hochvoltbereich mit einem nichtflüchtigen Speicher zum Abspeichern einer Zuordnungstabelle auszurüsten. Die Zuordnungstabelle vermittelt eine feinstufige Zuordnung zwischen einer Ansteuerungszeit im Rahmen einer PWM und einer Heizleistungsanforderungsstufe. Mit der Zuordnungstabelle kann eine nichtlineare Leistungscharakteristik eines Heizelements näherungsweise durch eine stückweise lineare Kurve dargestellt werden. Je mehr "Stützpunkte" verwendet werden, umso feinstufiger ist die Heizleistung einstellbar.

Unter "feinstufig" ist im Rahmen der vorliegenden Erfindung eine schrittweise Einstellbarkeit in einer Mehrzahl von Schritten zu verstehen, wobei die Zahl der Schritte so gewählt ist, dass die Leistungssprünge der ersten Schritte klein gegenüber der erreichbaren Gesamtleistung der Heizstufe sind.

Eine Ansteuerung gemäß der vorliegenden Erfindung eignet sich insbesondere für Heizelemente, bei denen die Leistungsabgabe nichtlinear mit dem Tastverhältnis steigt, wie dies bei PTC- Heizelementen im automobiltechnischen Hochvoltbereich der Fall ist. In diesem Fall ist eine einfache lineare Leistungsansteuerung, bei der die Abhängigkeit von Tastverhältnis und Leistung durch den Wert eines einzigen Proportionalitätsfaktors gekennzeichnet ist, nicht möglich. Gemäß einer bevorzugten Ausführungsform wird deshalb eine Zuordnungstabelle verwendet, bei der die Abhängigkeit zwischen den Zeitdauern und den Leistungswerten der zugeordneten Leistungsstufen nichtlinear ist. Hiermit wird die Nichtlinearität des Heizelementes in schrittweise linearisierter Form dargestellt.

In der Zuordnungstabelle wird jeder einer Mehrzahl vorgegebener Leistungsstufen (Nennleistung) eine entsprechende Zeitdauer der Ansteuerung des Heizelementes unter einer vorgegebenen Nenn-Bordspannung zugeordnet. Gemäß einer beispielhaften bevorzugten Ausführungsform liegt die Gesamtleistung der ersten Heizstufe im oberen dreistelligen Wattbereich, z.B. 750 W. Es sind aber beispielsweise auch 1000 W oder mehr möglich. Die Anzahl der hierbei möglichen vorgegebenen Leistungsstufen liegt in der beispielhaften Ausführungsform im oberen einstelligen Bereich, z.B. 7 oder 8. In der Zuordnungstabelle wird gemäß einer Ausführungsform die Zeitdauer der Ansteuerung innerhalb eines fest vorgegebenen Taktrahmens unmittelbar als Zeitwert, vorzugsweise in Millisekunden (ms) abgespeichert. In einer alternativen Ausführungsform wird die Zeitdauer als Tastverhältnis in Prozent der Dauer des festen Taktrahmens angegeben. Der Taktrahmen ist eine Zeitdauer (Periode), nach der sich der Wechsel von aktiviertem und nicht aktiviertem Stromfluss (ein- bzw. ausgeschalteter Strom) periodisch wiederholt.

Gemäß einer bevorzugten Ausführungsform umfasst die elektrische Heizvorrichtung weiterhin eine oder mehrere weitere elektrische Heizstufen mit jeweils mindestens einem Heizelement. Bei den weiteren elektrischen Heizstufen handelt es sich vorzugsweise um sogenannte binäre Heizstufen, die nur jeweils zwischen Null und einer Maximalleistung umschaltbar sind. Die Heizleistung der Heizelemente ist durch die Steuereinrichtung über den durch die Heizelemente jeweils fließenden Strom für die Heizstufen separat einstellbar. Ein derartiges Ansteuerungskonzept ermöglicht eine kombinierte Ansteuerung, bei der für die Ansteuerung größerer Leistungsstufen binäre Heizstufen verwendet werden. Nur für die Feineinstellung wird eine kleine Heizstufe feinstufig (quasikontinuierlich) geschaltet. Im Hochvoltbereich beim einfachen Ansteuern der Heizkreise (z.B. durch ein PWM-Signal) normalerweise entstehende massive Störungen, z.B. durch EMV (elektromagnetische Verträglichkeit)- Abstrahlung oder leitungsgebundene Störungen, werden hierdurch vermieden.

Vorzugsweise ist der nichtflüchtige Speicher ein programmierbarer Festwertspeicher, vorzugsweise ein EEPROM (Electrically Erasable Programmable Read Only Memory).

PTC- Widerstände sind im Hochvoltbereich stark von den herrschenden Betriebsbedingungen, insbesondere der Bordnetzspannung und der Umgebungstemperatur abhängig. Es ist deshalb weiter wünschenswert, dass die Leistungsansteuerung einer PTC-basierten Vorrichtung im automobiltechnischen Hochvoltbereich eine Kompensation der Nichtlinearität der PTC-Charakteristik angesichts schwankender Umgebungstemperaturen und sich verändernder Betriebsbedingungen berücksichtigt.

Deshalb umfasst die elektrische Heizvorrichtung vorzugsweise weiterhin eine Einrichtung zum Messen des durch die Heizvorrichtung fließenden Gesamtheizstroms und eine Berechnungseinrichtung zum Berechnen einer momentanen Heizleistung aus dem gemessenen Gesamtheizstrom und einer Bordspannung des Kraftfahrzeugs. In dieser Ausführungsform wird die von der Steuereinrichtung einzustellende Heizleistung basierend auf der momentanen Heizleistung und einem Sollwert nachgeregelt. Die in der Zuordnungstabelle gespeicherten Festwerte für die Parameter der Heizleistungsansteuerung können naturgemäß keine Schwankungen der Betriebs- und Umgebungsbedingungen berücksichtigen, sondern beruhen auf vorab festgelegten Nominalbedingungen, insbesondere für Bordnetzspannung, Umgebungstemperatur und Strömungsgeschwindigkeit. Mit der Nachregelung wird erreicht, dass auch unter schwankenden Betriebs- und Umgebungsbedingungen und bei Heizelementen mit nichtlinearer Charakteristik eine vorgegebene Leistungsanforderung ständig möglichst genau erfüllt werden kann.

Für die Messung des Gesamtheizstroms wird vorzugsweise ein Hall-Sensor vorgesehen. Dies ermöglicht eine einfache, kostengünstige und robuste Strommessung. Demgegenüber führt eine Strommessung im Hochvoltbereich im Kraftfahrzeug mit einem Shunt zu hohen Störungen, so dass keine sinnvolle Messung mehr möglich ist. Im Falle einer Heizeinrichtung für ein Kraftfahrzeug mit einer Bordspannung im automobiltechnischen Hochvoltbereich von einigen hundert Volt ist der Hall-Sensor direkt in den Steuerkreis im Niedervoltbereich eingebunden. Somit steht der auf den Hochvoltbereich bezogene Strommesswert unmittelbar einer Verarbeitung im Niedervoltbereich zur Verfügung. Weiterhin wird damit eine vorgeschriebene Isolation zwischen dem Steuerkreis mit Niederspannung und dem Lastkreis im Hochvoltbereich eingehalten.

Gemäß einer bevorzugten Ausführungsform verfügt die Heizvorrichtung über einen weiteren nichtflüchtigen Speicher, in welchem die Bordspannung als vorgegebener Festwert hinterlegt ist. Weiter vorzugsweise ist der nichtflüchtige Speicher ein programmierbarer Festwertspeicher, vorzugsweise ein EEPROM. In dem EEPROM ist die Bordspannung in der Software oder Firmware hinerlegt. Der nichtflüchtige Speicher kann weiterhin vorzugsweise mit dem nichtflüchtigen Speicher integriert sein, in welchem die Zuordnungstabelle hinterlegt ist. Es ist aber auch möglich, die nichtflüchtigen Speicher für die Zuordnungstabelle und die Bordspannung separat vorzusehen.

Gemäß einer alternativen bevorzugten Ausführungsform wird die Bordspannung über eine Kommunikationsschnittstelle des Kraftfahrzeugs als Nachricht an die Heizvorrichtung übermittelt. Die Kommunikationsschnittstelle ist vorzugsweise ein Fahrzeugbus (z.B. ein CAN (Controller Area Network)- Bus oder LIN (Local Interconnect Network)-Bus).

Gemäß einer weiteren alternativen bevorzugten Ausführungsform wird die Bordspannung unmittelbar in der Heizvorrichtung gemessen. Dies geschieht vorzugsweise auf der Platine, also hochvoltseitig. Die Messung kann permanent oder in vorbestimmten Zeitabständen erfolgen.

Gemäß einer bevorzugten Ausführungsform umfasst die Heizvorrichtung weiterhin einen Komparator zum Bestimmen einer Abweichung der momentanen Heizleistung von dem Sollwert. Die Nachregelung erfolgt auf dieser Grundlage so, dass die Abweichung der momentanen Heizleistung von dem Sollwert minimiert wird.

Vorzugsweise kann auch das Umschalten der weiteren Heizstufen durch die Steuereinrichtung zur Anpassung der Leistungsaufnahme an den Sollwert verwendet werden.

Vorzugsweise ist die Bordspannung im automobiltechnischen Hochvoltbereich, insbesondere im Bereich von 200 V bis 500 V. Beispielsweise sind bei Fahrzeugen mit Elektroantrieb Bordnetzspannungen von etwa 300 V bis 400 V, zum Beispiel 350 V, gebräuchlich. Gemäß einer bevorzugten Ausführungsform handelt es sich bei den Heizelementen um PTC (positive temperature coeffizient)-Heizelemente.

Weiterhin wird die Nachregelung gemäß einer bevorzugten Ausführungsform mit Hilfe einer Regeleinrichtung implementiert, die einen Mikrocontroller umfasst. Gemäß der bevorzugten Ausführungsform erfolgt die Regelung im Mikrocontroller niedervoltseitig.

Weitere vorteilhafte Ausgestaltungen der vorliegenden Erfindung sind Gegenstand von Unteransprüchen.

Die Erfindung wird im Folgenden anhand der beiliegenden Figuren beschrieben, in denen:

Fig. 1 eine beispielhafte Darstellung eines Luftheizers für den automobiltechnischen Hochvoltbereich mit integrierter Elektronik darstellt;

Fig. 2 einen schematischen Aufbau einer Verdrahtungsplatine mit aufgesetzter Steuerelektronik und einem Leistungsschalter für einen Hochvolt-Luftheizer mit integrierter Elektronik darstellt;

Fig. 3 den schematischen Grundaufbau einer elektrischen Heizvorrichtung gemäß einer Ausführungsform der vorliegenden Erfindung zeigt;

Fig. 4 weitere Details des Aufbaus einer elektrischen Heizvorrichtung gemäß einer Ausführungsform der Erfindung zeigt;

Fig. 5 ein Beispiel für eine Zuordnungstabelle für die Ansteuerung der ersten Heizstufe gemäß einer Ausführungsform der vorliegenden Erfindung darstellt; und

Fig. 6 ein Beispiel für eine feinstufige kombinierte PWM/binäre Leistungsansteuerung/Leistungsstellung zeigt.

Die vorliegende Erfindung betrifft eine regelbare elektrische Kraftfahrzeugheizung, die vorzugsweise als Luft- oder Warmwasserheizung ausgebildet sein kann.

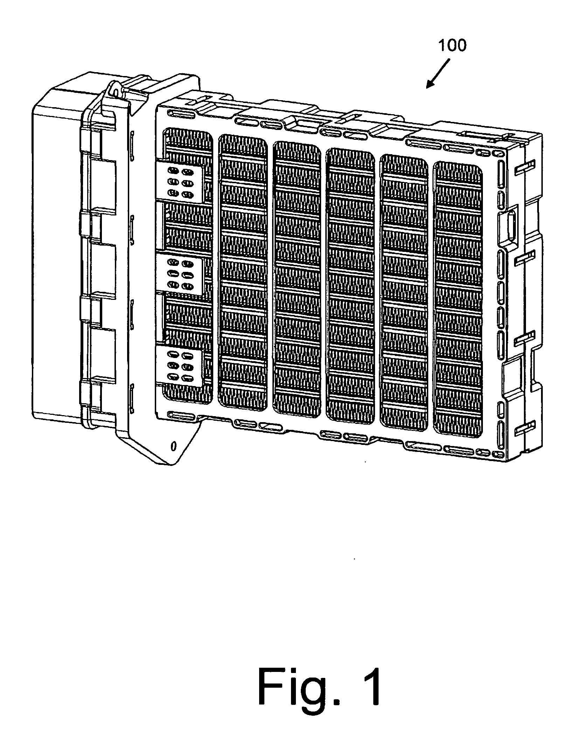

Fig. 1 zeigt den äußeren Aufbau einer beispielhaften Heizvorrichtung 100 gemäß der vorliegenden Erfindung. Beispielhaft stellt Fig. 1 einen Luftheizer für den automobiltechnischen Hochvoltbereich mit integrierter Elektronik dar. Die einzelnen Heizelemente sind in dem auf der rechten Seite der Zeichnung dargestellten Gehäuserahmen eingebaut. Die integrierte Steuerelektronik befindet sich in dem links dargestellten Anschlusskasten.

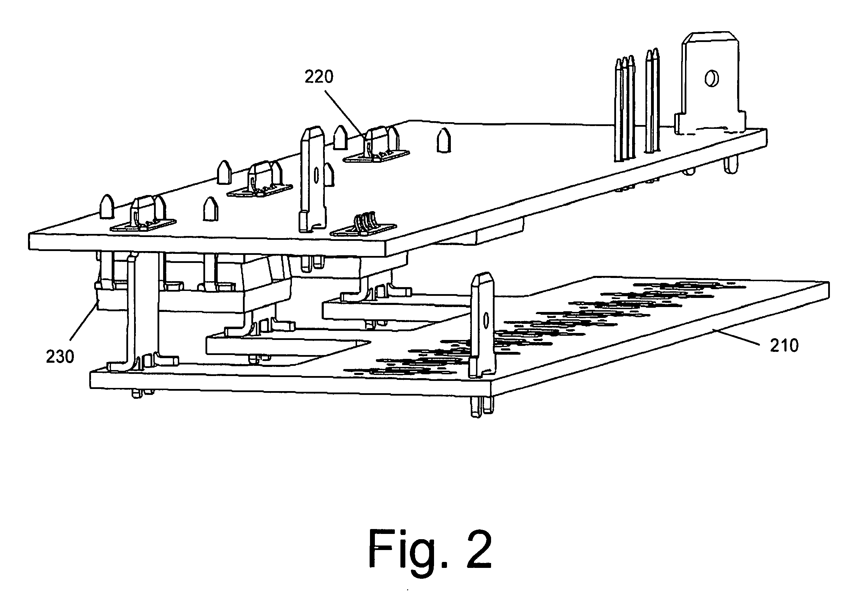

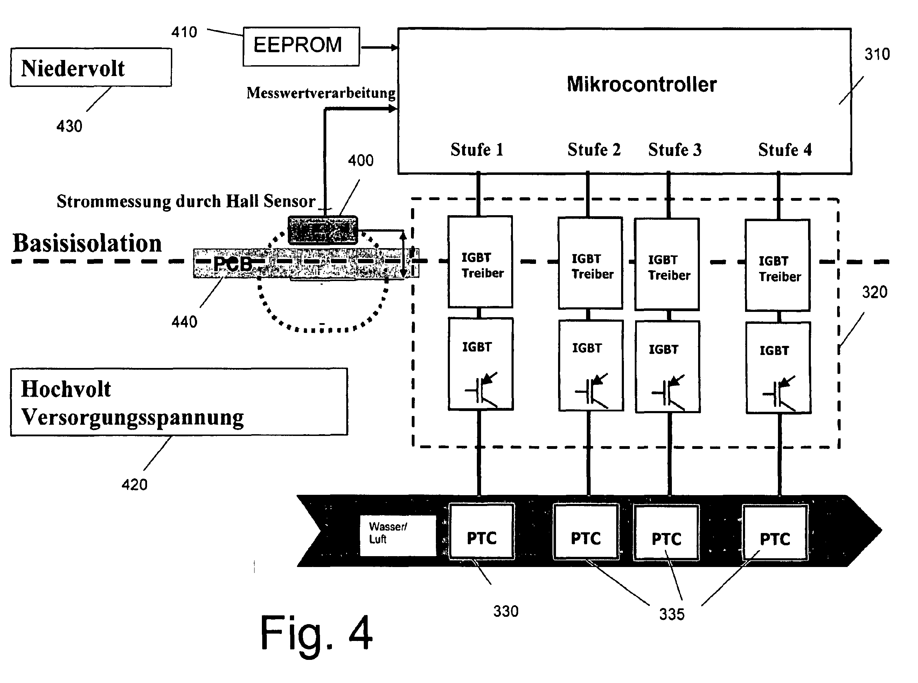

Details des äußeren Aufbaus der Elektronik sind in Fig. 2 dargestellt. Fig. 2 zeigt einen modularen Aufbau der Elektronik in sandwichartiger Form, bei dem die verschiedenen Module über eine Verdrahtungsplatine 210 miteinander verbunden sind. Insbesondere betrifft dies die Steuerungselektronik 220 und die Leistungsschalter 230. Die Steuerungselektronik 220 umfasst Komponenten zur Steuerung und zur Regelung gemäß der vorliegenden Erfindung. Insbesondere dienen Leistungsschalter 230 als Bestandteile der Steuereinrichtung gemäß der Erfindung dem unmittelbaren Stellen der Heizleistung durch Zu- und Abschalten eines kontrollierten Stromflusses durch die jeweils den Leistungsschaltern zugeordneten Heizelemente einer Heizstufe. Weitere Details des Aufbaus der Elektronik gemäß einer beispielhaften Ausführungsform werden im Zusammenhang mit Fig. 4 erläutert.

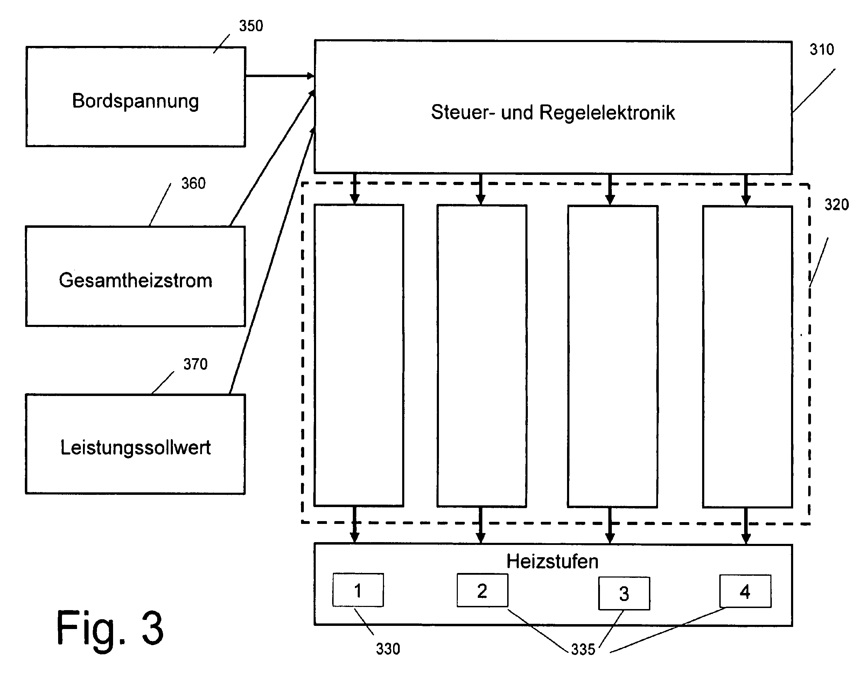

Fig. 3 zeigt beispielhaft einen schematischen Aufbau einer Heizvorrichtung gemäß der vorliegenden Erfindung. In dem dargestellten Beispiel umfasst die Heizvorrichtung vier Heizstufen 1 bis 4. Die vier Heizstufen umfassen eine erste Heizstufe 330 sowie (in der beispielhaften Darstellung drei) weitere Heizstufen 335. Gemäß der vorliegenden Erfindung ist die erste Heizstufe 330 stufig (quasikontinuierlich) in kleinen Schritten ansteuerbar. Die weiteren Heizstufen 335 sind binäre Heizstufen, deren Leistung nur zwischen Null und einem Maximalwert umschaltbar ist. Der unmittelbaren Ansteuerung der Heizstufen dient eine Gruppe von Leistungsschaltern 320. Die Leistungsschalter sind jeweils einer der Heizstufen zugeordnet. Zur Ansteuerung der Leistungsschalter dient die Steuerelektronik 310, die gemäß einer bevorzugten Ausführungsform als Mikrocontroller implementiert ist.

Hierbei kann eine erste Einstellung der Heizleistung entsprechend einer Leistungsanforderung unter Annahme von Nominalbedingungen für die Betriebs- und Umgebungsparameter erfolgen. Beispiele für herstellerseitig eingestellte Nominalbedingungen sind z.B. eine Bordspannung von 350 Volt sowie die Annahme einer Lufttemperatur von 0° C bei einem Luftheizer. Darüber hinaus schließen die Nominalbedingungen auch eine festgelegte Strömungsgeschwindigkeit (zum Beispiel Luftdurchsatzgeschwindigkeit 300kg/h bzw. bei flüssigem Medium 10l/min) ein. Die unter Nominalbedingungen zur Erreichung einer vorgegebenen Leistungsanforderung erforderlichen Steuerparameter sind herstellerseitig hinterlegt. Dies kann z.B. in Form von Firmware oder Software in einem EEPROM erfolgen.

Zur Anpassung an die Betriebsbedingungen und veränderte Umgebungsbedingungen wird die so im ersten Schritt voreingestellte Leistung (Nennwert) an die genaue Leistungsanforderung durch Nachregelung angepasst. Zu diesem Zweck ist in die Steuerelektronik 310 eine Regeleinrichtung integriert, mit deren Hilfe ein Regelkreis zur Nachregelung der von der Steuereinrichtung eingestellten Heizleistung realisiert wird. Alternativ ist es im Rahmen der vorliegenden Erfindung auch möglich, die Regeleinrichtung in getrennter Hardware vorzusehen. Die Regeleinrichtung benötigt zur Nachregelung den Wert der Bordspannung 350, die Sollwertvorgabe 370 für die von der Heizvorrichtung aufzunehmende Leistung, sowie den gemessenen Wert des Gesamtheizstroms 360. Der Gesamtheizstrom schließt den über einen Taktrahmen oder mehrere Taktrahmen gemittelten Wert des Stroms für eine mittels Modulation des Stroms (z.B. PWM) angesteuerte Heizstufe ein. Die Mittelung kann mittels Software in einem Mikrocontroller erfolgen.

Die Bordspannung 350 kann hierbei auf verschiedene Weise bereitgestellt werden.

Gemäß einer bevorzugten Ausführungsform kann die Bordspannung als Festwert, zum Beispiel in einem EEPROM, gespeichert werden. Hierbei wird ein vorab fest eingestellter Nennwert für die Bordspannung verwendet. Eine solche Ausführungsform ist besonders kostengünstig zu realisieren. Sie hat allerdings den Nachteil, dass der momentane Ist-Wert der Heizleistung nicht exakt bestimmt werden kann, da Abweichungen der Bordspannung vom Nennwert im Betrieb nicht berücksichtigt werden.

Alternativ kann die Bordspannung 350 im Fahrzeug, auf der Platine der Heizvorrichtung, direkt gemessen werden. Hiermit wird der Nachteil der oben genannten Ausführungsform beseitigt, denn bei jeder Änderung der Bordspannung im Betrieb kann der aktuelle Wert sehr schnell bereitgestellt werden. Ein Nachteil dieser Ausführungsform sind allerdings die aufgrund der speziell vorzusehenden Spannungsmesseinrichtung am Heizer entstehenden hohen Kosten.

Weiterhin alternativ ist eine Bereitstellung als Nachricht aus dem Kraftfahrzeugbordnetz über einen Fahrzeugbus möglich. Die Bordnetzspannung 350 wird ständig im Fahrzeug erfasst und über das Bordnetz bereitgestellt. Diese Ausführungsform stellt insofern einen Kompromiss dar, als sie kostengünstiger ist als die Direktmessung, aber dafür die Änderungen langsamer berücksichtigt. Ein aktualisierter Wert der Bordnetzspannung 350 steht bei dieser Ausführungsform nur alle 200 bis 300ms zur Verfügung.

Die Heizleistungsvorgaben 370 erhält die Regeleinrichtung 310 zum Beispiel aus dem Fahrzeugbordnetz über den Fahrzeugbus (zum Beispiel LIN- oder CAN- Datenbus). Sie können zum Beispiel automatisch so festgesetzt werden, dass vorhandene Leistungsreserven des Bordnetzes möglichst vollständig ausgeschöpft werden. Sie können auch vom Fahrer über das Klimabedienteil vorgegeben werden.

Alternativ ist es auch möglich, anstelle der Leistungsvorgaben 370 eine gewünschte Temperatur vorzugeben. Dies kann zum Beispiel eine Temperatur an einem bestimmten Teil des Fahrzeugs, wie eine Innenraumtemperatur, oder eine Temperatur des strömenden Mediums, sein. Die Temperaturvorgabe 220 wird von der Steuerungselektronik 220 in eine Leistungsvorgabe 370 umgesetzt.

Mit Hilfe der Bordspannung 350 und des Gesamtheizstroms 360 wird zunächst die aufgenommene Leistung (Istwert) ermittelt. Hierzu wird der gemessene und gegebenenfalls geeignet zeitlich, zum Beispiel über einen oder mehrere Taktrahmen gemittelte, Stromwert 360 mit der Bordspannung multipliziert. Der Istwert der Gesamtheizleistung ergibt sich gemäß der Gleichung

$$P = U \times I,$$

wonach die von einem Bauelement (hier: die Gesamtheit der Heizstufen der Heizvorrichtung 100) aufgenommene elektrische Leistung P gleich dem Produkt aus der am Bauelement anliegenden Spannung U und dem insgesamt durch das Bauelement fließenden Strom I ist. Der so ermittelte Istwert der momentanen Gesamtleistung der Heizvorrichtung 100 wird anschließend durch einen in der Regeleinrichtung implementierten Komparator mit der vorgegebenen Leistungsanforderung (Sollwert) verglichen. Darauf basierend wird die Steuereinrichtung veranlasst, die Leistungsaufnahme durch eine entsprechende Anpassung der Heizleistungseinstellung zu korrigieren. Die neu einzustellende Heizleistung (Nennwert) entspricht in einer bevorzugten Ausführungsform dem um die Sollwertabweichung verminderten oder erhöhten zuvor eingestellten Nennwert. Die Korrektur geschieht zunächst über die Einstellung der quasikontinuierlichen ersten Heizstufe 330. Je nach Erfordernis kann darüber hinaus das Zu-/Abschalten der weiteren binären Heizstufen 335 in die Korrekturanpassung der Heizleistung einbezogen werden.

In dem Regelkreis zur Nachregelung wird so ständig der eingestellte Nennwert der Heizleistung angepasst. Mit dem so erläuterten Konzept übernimmt der Heizer immer eine Nachregelung der Leistung in Richtung Sollwert. Die Nachregelung kann, durch entsprechend festgelegte und zeitlich variable Leistungsanforderungen, weiterhin auch dazu verwendet werden, immer die maximalen, im Fahrzeug vorhandenen Leistungsreserven auszuschöpfen.

Eine detailliertere Darstellung der wesentlichen Elemente einer erfindungsgemäßen regelbaren Heizvorrichtung ist in Fig. 4 gezeigt. Gemäß der in Fig. 4 gezeigten Ausführungsform umfasst die Heizvorrichtung einen Lastkreis mit einer Versorgungsspannung im automobilen Hochvoltbereich 420 und einen Steuerkreis mit einer Arbeitsspannung im Niedervoltbereich 430. Beide Bereiche müssen galvanisch gut voneinander isoliert sein (Basisisolation). Hierbei sind insbesondere auch Hochvolt- und Niedervoltbereiche auf der Platine (PCB - printed circuit board) 440 voneinander elektrisch isoliert. Eine Strommessung (Messung des durch die Heizvorrichtung fließenden Gesamtstroms) wird im vorliegenden Fall auf besonders einfache Weise, und ohne Beeinflussung der elektrischen Isolierung auf elektromagnetischem Wege, mit Hilfe eines Hall-Sensors 400 ausgeführt (indirekte Strommessung).

Der Mikrocontroller 310 verarbeitet sowohl Messwerte, als auch im System vorgegebene Festwerte, wie etwa die Bordspannung oder die Zuordnungstabelle für die quasikontinuierliche Leistungsansteuerung der ersten Heizstufe mittels PWM. Als Speichereinrichtung für derartige Systemparameter ist beispielhaft EEPROM 410 dargestellt. In der vorliegenden Ausführungsform umfasst die Gruppe von Steuerelementen 320 für jede der Heizstufen 330, 335 (hier veranschaulicht durch jeweils ein PTC-Heizelement) separat ansteuerbare Leistungsschalter, vorzugsweise ausgeführt als IGBT (Insulated Gate Bipolar Transistor)-Leistungsschalter. Die im Hochvoltbereich arbeitenden IGBT-Leistungsschalter werden von IGBT-Treibern angesteuert, die ihre Steuersignale wiederum niedervoltseitig vom Mikrocontroller 310 erhalten. Vorzugsweise ist die Schaltergruppe 320 mit allen IGBT- Treibern und IGBT- Schalttransistoren in einem gemeinsamen Gehäuse untergebracht.

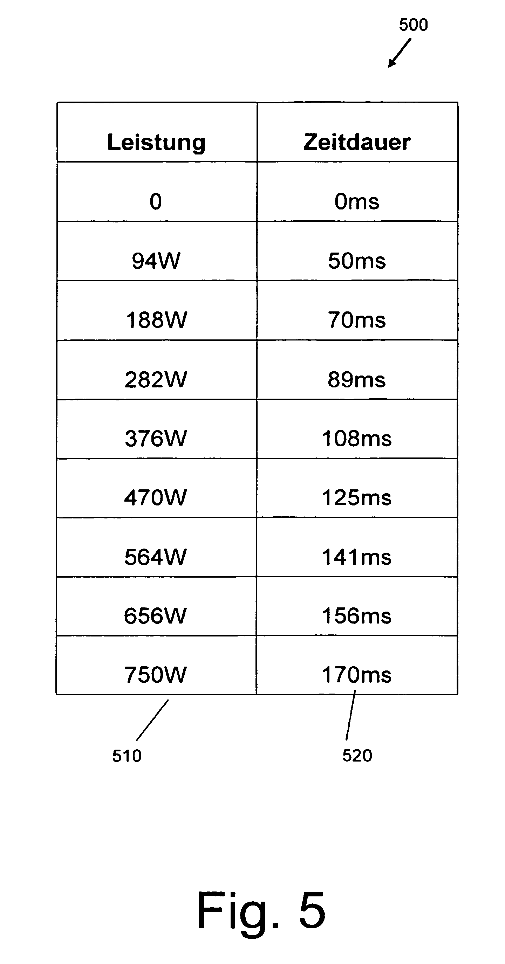

Es folgt eine detaillierte Beschreibung eines beispielhaften Ansteuerungs- und Regelungskonzepts gemäß der vorliegenden Erfindung. Es wird ein spezielles Ausführungsbeispiel für die Leistungsansteuerung einer in kleinen Stufen (quasikontinuierlich) ansteuerbaren Heizstufe unter Bezug auf die in Fig. 5 gezeigte Zuordnungstabelle 500 erläutert.

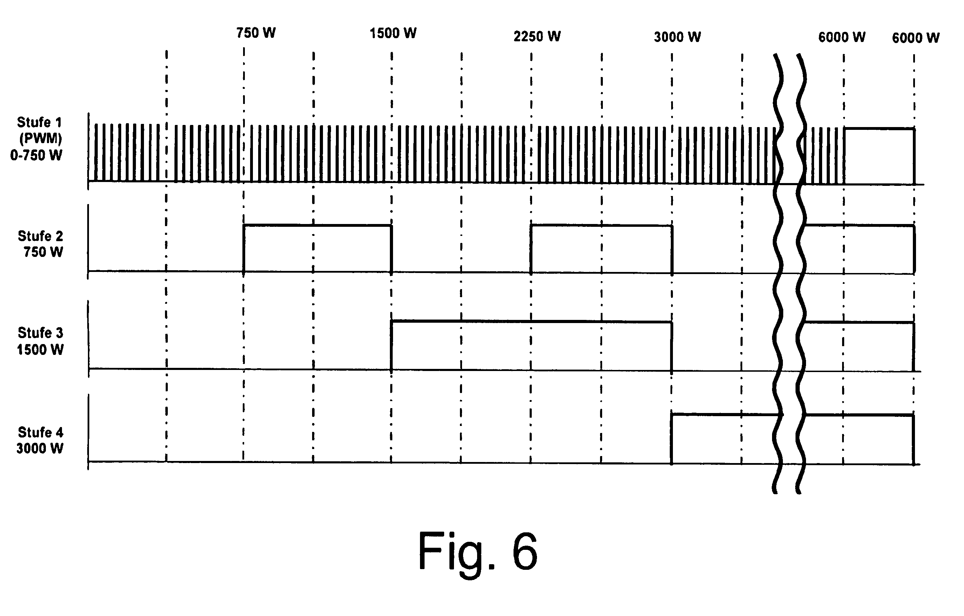

Die Steuerung erfolgt dabei in einem Verfahren, welches prinzipiell auf PWM (pulse width modulation) beruht, aber modifiziert wurde, um speziell die Möglichkeit eines Einsatzes von Heizelementen mit einer nichtlinearen Leistungscharakteristik im Hochvoltbereich, wie z.B. PTC-Elementen, zu ermöglichen. Die Maximalleistung im Beispiel der Fig. 5, 750W, wird hierbei durch permanente Zuschaltung der ersten Heizstufe (s. Stufe 1 in Fig. 6, max. 750W) erreicht. Dies bedeutet, dass die Zeitdauer der Ansteuerung gleich der Länge des Taktrahmens ist, oder anders ausgedrückt, ein Tastverhältnis von 100%. Sie kann alternativ auch durch permanente Zuschaltung der zweiten, binären Heizstufe mit 750W Leistung bei abgeschalteter erster Heizstufe erreicht werden. Das Steuerungskonzept wird weiter unten unter Bezug auf Fig. 6 näher erläutert. Im EEPROM ist also ein diskretes Kennfeld mit - im vorstehenden Beispiel der Fig. 5 (für Stufe 1 in Fig. 6) - acht Leistungsstufen abgelegt.

Bei einer herkömmlichen PWM wird ein Tastverhältnis proportional zur angeforderten Leistung verwendet. Beträgt also z.B. die Leistungsanforderung 50% der maximal von der Heizstufe aufzunehmenden Leistung, so wird eine Ansteuerung mit einem Tastverhältnis von 50% innerhalb eines Taktrahmens vorgenommen. Eine solche Ansteuerung (Tastverhältnis proportional zur Leistungsanforderung) entspricht einer linearen Abhängigkeit der Leistung vom Tastverhältnis. Diese ist aber im automobiltechnischen Hochvoltbereich nicht gegeben. Bei einem typischen Beispiel für bei ca. 350V verwendete PTC- Heizelemente werden bei einem Tastverhältnis von 40% bereits 80% Nennleistung unter Nominalbedingungen erreicht. Die Beziehung zwischen Tastverhältnis und Nennleistung kann aber auch einen ganz anderen nichtlinearen Verlauf haben, so wie zum Beispiel in Fig. 5 gezeigt.

Im Gegensatz zur herkömmlichen PWM sind bei dem hier geschilderten speziellen Steuerungskonzept einzelne Leistungsstufen und zugehörige Ansteuerungszeiten innerhalb eines Taktrahmens als Festwerte in der Steuerelektronik der Heizvorrichtung hinterlegt. Dies erfolgt in Form einer Tabelle (Zuordnungstabelle) mit einer Anzahl von Wertepaaren, die auf der einen Seite eine einzustellende Leistung und auf der anderen Seite die dazu erforderliche Ansteuerungsdauer angeben.

Ein einfaches Beispiel für eine solche Zuordnungstabelle 500 zeigt Fig. 5. In der linken Spalte 510 sind die einzelnen ansteuerbaren Leistungsstufen (Nennleistungen entsprechend Nominalbedingungen) als Festwerte gespeichert. Wie der beispielhaft aufgeführten Tabelle 500 zu entnehmen ist, ist in diesem Beispiel die maximale Leistungsaufnahme der Heizstufe (bei permanenter Ansteuerung) 750 Watt. Der Bereich von 0 bis 750 Watt ist in acht Stufen eingeteilt, so dass eine feinstufige (quasikontinuierliche) Einstellung der Heizleistung, mit Stufen unterhalb 100 Watt, ermöglicht wird.

In der rechten Spalte 520 der Tabelle 500 sind die den jeweiligen Nennleistungsstufen zugeordneten Ansteuerzeiten in Millisekunden hinterlegt. Die Ansteuerung der Heizstufen erfolgt so, dass je nach angeforderter Leistung die Heizstufe für die zugeordnete Zeitdauer durch Einschalten des Stromflusses unter der jeweiligen Bordspannung angesteuert wird. Wie bei einer herkömmlichen PWM wird die Ansteuerung bei einem neuen Taktrahmen wiederholt. Die Länge des vorgegebenen festen Taktrahmens liegt im vorliegenden Beispiel bei 170ms. Die Länge des Taktrahmens ist aber nicht erfindungswesentlich. Es sind auch ganz andere Taktrahmenlängen von z.B. 150ms oder 200ms oder aber Taktrahmen von einer ganz anderen Größenordnung möglich.

Auf diese Weise kann der Zusammenhang zwischen der Heizleistungsanforderung und der dazu abgespeicherten Ansteuerungsdauer pro Taktrahmen in der Zuordnungstabelle beliebig ausgestaltet sein. Damit lässt sich insbesondere die Nichtlinearität eines PTC-Heizelementes im Hochvoltbereich kompensieren. Hierzu werden die entsprechenden Ansteuerungszeiten vorab empirisch ermittelt, und herstellerseitig im EEPROM 410 abgespeichert. Die Nennleistungen und dazu empirisch ermittelten Ansteuerzeiten entsprechen festgelegten Nominalbedingungen, also insbesondere einer vorgegebenen Bordspannung (z.B. 350 V) und einer festen Temperatur der Umgebung des Heizelementes (z.B. 0°C). Aufgrund der vorab festgelegten Wertetabelle findet im Rahmen dieser Ansteuerung also keine Anpassung an aktuell veränderte Betriebsparameter und insbesondere keine Temperaturkompensation statt, was in der Praxis zu Toleranzen im Bereich von ca. maximal 30 % führt. Dieser Nachteil der vorstehend beschriebenen einfachen und robusten Ansteuerung der Leistungsstufen einer quasikontinuierlichen Heizstufe wird im Rahmen der vorliegenden Ausführungsform in guter Näherung durch die ständige Nachregelung, basierend auf einem Soll-Istwertvergleich, wie oben beschrieben, ausgeglichen. Es wird hierbei insbesondere berücksichtigt, dass sich auch die Abweichung der realen Umgebungsbedingungen, sowie weiterer Betriebsparameter wie Bordspannung und Strömungsgeschwindigkeit, von den Nominalbedingungen im realen Betrieb ständig ändern kann.

Übliche Spannungsschwankungen in Bordnetzen im automobilen Hochvoltbereich liegen in einer Größenordnung von 100V. Elektrofahrzeuge besitzen beispielsweise eine Nennspannung von 350V. Nach Aufladung der Batterie kann die Bordnetzspannung bis auf ca. 380V ansteigen, bei Entladung bis auf ca. 280V abfallen. Eine entsprechende Schwankung haben auch Elektrofahrzeuge mit einer anderen Nennspannung des Bordnetzes, zum Beispiel 400V. Für Hybridfahrzeuge liegt die Nennspannung bei ca. 288V, die maximale Bordnetzspannung bei ca. 350V, die minimale Spannung bei ca. 200V.

Die erfindungsgemäße Regelung durch Überwachung der tatsächlich erbrachten Heizleistung ist prinzipiell auch in 12V- Bordnetzen anwendbar. Jedoch spielt eine Spannungsschwankung bei 12V- Bordnetzen (beispielsweise auf 12,5V) für die Heizleistung nur eine untergeordnete Rolle. Entscheidend ist im wesentlichen die Stromstärke (wesentlich höher als im automobilen Hochvoltbereich). Hinzu kommt bei den für PTC- Heizelemente verwendeten Materialien (zum Beispiel keramikähnlich auf Basis von Bariumtitanat) im automobiltechnischen Hochvoltbereich ein Halbleitereffekt, wonach der Widerstand nicht nur von der Temperatur, sondern auch von der Spannung abhängig ist.

Die Einstellung der Leistungsstufen durch die Steuereinrichtung erfolgt also auf der Grundlage von Nennleistungen, die vorgegebenen Nominalbedingungen entsprechen. Die Angleichung der realen Heizleistung an den Leistungssollwert erfolgt durch die Nachregelung im Regelkreis. Hierbei wird zur Minimierung der vom Komparator ermittelten Differenz zwischen Ist- und Sollleistung eine der Differenz entsprechende Nennleistung zu- oder abgeschaltet.

Im Rahmen des vorstehend erläuterten Ansteuerungskonzeptes ist es weiterhin auch möglich, größere Gesamtheizleistungen feinstufig anzusteuern. Hierzu wird eine Kombination einer feinstufig ansteuerbaren ersten Heizstufe mit weiteren binären Heizstufen verwendet, wie diese oben in Zusammenhang mit den Figuren 3 und 4 erwähnt wurde.

Beispielhaft ist die Ansteuerung von Leistungswerten zwischen 0 und 6000 Watt mit Hilfe einer solchen Kombination in Fig. 6 gezeigt. Es sind insgesamt vier Heizstufen vorgesehen. Die erste (quasikontinuierliche) Heizstufe hat im vorliegenden Beispiel eine maximale Leistungsaufnahme von 750 Watt. Die Leistungsaufnahmen der binären Heizstufen sind wie folgt: zweite Heizstufe: 750 Watt, dritte Heizstufe: 1500 Watt und vierte Heizstufe: 3000 Watt.

Im Bereich von 0 bis 750 Watt ist eine feinstufige Ansteuerung, wie oben beschrieben, allein unter Verwendung der ersten Heizstufe möglich. Im folgenden Bereich zwischen 750 Watt und 1500 Watt (also wieder einem Bereich von 750 Watt) wird die zweite Heizstufe binär zugeschaltet, während die erste Heizstufe nach dem obigen Konzept die Feinsteuerung innerhalb des Bereiches liefert. In dem nächsten 750 Watt umfassenden Bereich (von 1500 Watt bis 2250 Watt) erfolgt dies analog unter Zuschaltung der dritten Heizstufe, wobei die zweite Heizstufe wieder abgeschaltet wird. Im nachfolgenden Bereich zwischen 2250 Watt und 3000 Watt werden die zweite und dritte binäre Heizstufe gleichzeitig zugeschaltet. Ab 3000 Watt wird die vierte Heizstufe permanent zugeschaltet, so dass auf analoge Weise wie oben für den Bereich unterhalb 3000 Watt beschrieben, die Heizleistung im Gesamtbereich bis 6000 Watt in insgesamt 64 Schritten (entsprechend "Stützpunkten" einer stufenweise linearen Abbildung) feinstufig gesteuert werden kann. Die Anzahl der Stufen (hier: 8 für eine einzelne Heizstufe bis 750W und 8 x 8 = 64 im Gesamtbereich über 8 x 750W = 6000W) dient jedoch nur zur beispielhaften Veranschaulichung. Vorzugsweise werden mehr als 50 Stufen, zum Beispiel zwischen 50 und 100 Stufen verwendet. Es sind aber auch mehr als 100 Stufen und auch eine noch deutlich größere Anzahl von Stufen, zum Beispiel ungefähr 200 Stufen möglich. Je mehr Teilschritte verwendet werden, desto feiner ist die Auflösung der einstellbaren Heizleistung.

Mit einem solchen Steuerkonzept wird erreicht, dass die PWM-Taktung nur in einer ersten Heizstufe, die den kleinsten Leistungsbereich umfasst, erforderlich ist, während im höheren Leistungsbereich eine einfache binäre Ansteuerung erfolgt. Die Anwendung der PWM erfolgt nur zur Feinstellungs-Regelung. Dadurch werden Störungen im Hochvoltbereich durch EMV-Abstrahlung weitgehend vermieden. Die Taktfrequenzen der quasikontinuierlichen Heizstufe werden darüber hinaus hinsichtlich EMV/Ripplestrom optimiert. Generell bewirkt zudem eine feinere Auflösung der Teilschritte geringere Störungen im Hochvolt- Bordnetz.

Zusammenfassend, betrifft die vorliegende Erfindung eine elektrische Heizvorrichtung für Kraftfahrzeuge, insbesondere mit Elektroantrieb. Die erfindungsgemäße Heizvorrichtung verwendet ein PWM- basiertes Ansteuerungskonzept, welches für Heizelemente mit beliebigen nichtlinearen Kennlinien verwendbar ist. Hierbei werden Ansteuerungszeiten in einem Taktrahmen anzusteuernden Leistungsstufen zugeordnet und in einer Tabelle in einem nichtflüchtigen Speicher abgespeichert.

**Patentansprüche**

1. Elektrische Heizvorrichtung zur Erwärmung von Fluiden für Kraftfahrzeuge, insbesondere mit Elektroantrieb, wobei die Heizvorrichtung umfasst:

   eine elektrische Heizstufe (330) mit einem oder mehreren Heizelementen; und
   eine Steuereinrichtung (230, 320) zum feinstufigen Einstellen einer Heizleistung über eine Modulation des durch die Heizstufe (330) fließenden Stroms;
   **gekennzeichnet durch**
   einen nichtflüchtigen Speicher (410) zum Abspeichern einer Zuordnungstabelle (500), die jeder Leistungsstufe einer Mehrzahl vorgegebener Leistungsstufen (510) eine Zeitdauer (520) für die Ansteuerung der elektrischen Heizstufe (330) zuordnet; und **dadurch**, dass
   die Steuereinrichtung (230, 320) zur Einstellung der Heizleistung der elektrischen Heizstufe (330) den Stromfluss **durch** die elektrische Heizstufe (330) für die einer Leistungsstufe (510) in der Zuordnungstabelle (500) zugeordnete Zeitdauer (520) innerhalb eines vorgegebenen Taktrahmens aktiviert.

2. Elektrische Heizvorrichtung nach Anspruch 1, wobei die Abhängigkeit zwischen den in der Zuordnungstabelle (500) gespeicherten Zeitdauern (520) und den Leistungswerten der zugeordneten Leistungsstufen (510) der ersten elektrischen Heizstufe nichtlinear ist.

3. Elektrische Heizvorrichtung nach Anspruch 1 oder 2, wobei in der Zuordnungstabelle (500) die Zeitdauer (520) als Tastverhältnis in Prozent der Dauer des vorgegebenen Taktrahmens angegeben ist.

4. Elektrische Heizvorrichtung nach einem der Ansprüche 1 bis 3, weiterhin umfassend
   eine oder mehrere weitere elektrische Heizstufen (335) mit jeweils mindestens einem Heizelement;
   wobei die Heizleistung der weiteren elektrischen Heizstufen (335) jeweils nur zwischen Null und einer Maximalleistung umschaltbar ist, und
die Heizleistung durch die Steuereinrichtung (230, 320) über den durch die Heizstufen jeweils fließenden Strom separat für die elektrischen Heizstufen (330, 335) einstellbar ist.

5. Elektrische Heizvorrichtung nach einem der Ansprüche 1 bis 5, wobei der nichtflüchtige Speicher (410) ein programmierbarer Festwertspeicher, vorzugsweise ein EEPROM ist.

6. Elektrische Heizvorrichtung nach einem der Ansprüche 1 bis 5, weiterhin umfassend:

    eine Einrichtung zum Messen des durch die Heizvorrichtung fließenden Gesamtheizstroms (360); und
    eine Berechnungseinrichtung (310) zum Berechnen einer momentanen Heizleistung aus dem gemessenen Gesamtheizstrom (360) und einer Bordspannung (350) des Kraftfahrzeugs; wobei die von der Steuereinrichtung (230, 320) einzustellende Heizleistung basierend auf der momentanen Heizleistung und einem Sollwert (370) nachgeregelt wird.

7. Elektrische Heizvorrichtung nach Anspruch 6, wobei die Einrichtung zum Messen des Gesamtheizstroms (360) einen Hall-Sensor (400) umfasst.

8. Elektrische Heizvorrichtung nach Anspruch 6 oder 7, weiterhin umfassend einen weiteren nichtflüchtigen Speicher (410), in dem die Bordspannung (350) als vorgegebener Festwert hinterlegt ist.

9. Elektrische Heizvorrichtung nach Anspruch 8, wobei der weitere nichtflüchtige Speicher (410) ein programmierbarer Festwertspeicher, vorzugsweise ein EEPROM ist.

10. Elektrische Heizvorrichtung nach Anspruch 6 oder 7, wobei die Bordspannung (350) über eine Kommunikationsschnittstelle des Kraftfahrzeugs als Nachricht an die Heizvorrichtung übermittelt wird.

11. Elektrische Heizvorrichtung nach Anspruch 10, wobei die Kommunikationsschnittstelle ein Fahrzeugbus ist.

12. Elektrische Heizvorrichtung nach Anspruch 6 oder 7, wobei die Bordspannung (350) in der Heizvorrichtung gemessen wird.

13. Elektrische Heizvorrichtung nach einem der Ansprüche 6 bis 12, weiterhin umfassend einen Komparator (310) zum Bestimmen einer Abweichung der momentanen Heizleistung von dem Sollwert (370); wobei die Nachregelung die Abweichung der momentanen Heizleistung von dem Sollwert (370) minimiert.

14. Elektrische Heizvorrichtung nach einem der Ansprüche 1 bis 13, wobei die Heizelemente PTC- Heizelemente sind.

15. Verfahren zum Ansteuern einer elektrischen Heizvorrichtung, die eine elektrische Heizstufe (330) mit einem oder mehreren Heizelementen zur Erwärmung von Fluiden in einem Kraftfahrzeug umfasst, wobei die Heizleistung feinstufig über eine Modulation des durch die Heizstufe (330) fließenden Stroms eingestellt wird;
**dadurch gekennzeichnet, dass**
der Stromfluss durch die elektrische Heizstufe (330) jeweils für eine vorgegebene Zeitdauer (520) innerhalb eines vorgegebenen Taktrahmens aktiviert wird;
die vorgegebene Zeitdauer eine aus einer Mehrzahl in einem nichtflüchtigen Speicher (410) abgespeicherten Zeitdauern (520) ist und
in dem nichtflüchtigen Speicher (410) jeder Leistungsstufe einer Mehrzahl vorgegebener Leistungsstufen (510) eine Zeitdauer für die Ansteuerung der elektrischen Heizstufe (330) zugeordnet ist.

## Claims

1. An electrical heating device for heating fluids for motor vehicles, in particular with electrical propulsion, wherein the heating device comprises:

    an electrical heating stage (330) with one or a plurality of heating elements; and
    a control device (230, 320) for adjusting a heating power in fine steps by means of a modulation of the current flowing through the heating stage (330);
    **characterized by**
    a non-volatile memory (410) for storing an assignment table (500), which assigns a time period (520) for the activation of the electrical heating stage (330) to each power stage of a plurality of specified power stages (510); and in that
    the control device (230, 320) activates the current through the electrical heating stage (330) for the time period (520) assigned to a power stage (510) in the assignment table (500) within a specified cycle frame in order to adjust the heating power of the electrical heating stage (330).

2. An electrical heating device according to claim 1, wherein the relationship between the time periods (520) stored in the assignment table (500) and the power values of the assigned power stages (510) of the first electrical heating stage is non-linear.

3. An electrical heating device according to claim 1 or 2, wherein the time period (520) is specified in the assignment table (500) as a duty ratio in a percentage of the duration of the specified cycle frame.

4. An electrical heating device according to any of claims 1 to 3, further comprising:

> one or a plurality of further electrical heating stages (335) each with at least one heating element;
> wherein the heating power of the further electrical heating stages (335) can in each case be switched only between zero and maximum power, and
> the heating power can be separately adjusted by the control device (230, 320) for the electrical heating stages (330, 335) by means of the current flowing through each of the heating stages.

5. An electrical heating device according to any of claims 1 to 5, wherein the non-volatile memory (410) is a programmable read only memory, preferably an EEPROM.

6. An electrical heating device according to any of claims 1 to 5, further comprising:

> a device for the measurement of the total heating current (360) flowing through the heating device; and
> a calculation device (310) for calculating a momentary heating power from the measured total heating current (360) and an on-board electrical voltage (350) of the motor vehicle;
> wherein the heating power to be adjusted by the control device (230, 320) is readjusted based on the momentary heating power and a set value (370).

7. An electrical heating device according to claim 6, wherein the device for measuring the total heating current comprises (360) a Hall sensor (400).

8. An electrical heating device according to claim 6 or 7, furthermore comprising a further non-volatile memory (410) in which the on-board electrical voltage (350) is stored as a specified fixed value.

9. An electrical heating device according to claim 8, wherein the further non-volatile memory (410) is a programmable read only memory, preferably an EEPROM.

10. An electrical heating device according to claim 6 or 7, wherein the on-board electrical voltage (350) is transmitted as a message to the heating device through a communication interface of the motor vehicle.

11. An electrical heating device according to claim 10, wherein the communication interface is a vehicle bus.

12. An electrical heating device according to claim 6 or 7, wherein the on-board electrical voltage (350) is measured in the heating device.

13. An electrical heating device according to any of claims 6 to 12, further comprising a comparator (310) for the determination of a deviation of the momentary heating power from the set value (370); wherein the readjustment minimises the deviation of the momentary heating power from the set value (370).

14. An electrical heating device according to any of claims 1 to 13, wherein the heating elements are PTC heating elements.

15. A method of controlling an electrical heating device which comprises an electrical heating stage (330) with one or a plurality of heating elements for heating fluids in a motor vehicle, wherein the heating power is adjusted in fine steps by means of a modulation of the current flowing through the heating stage (330);
**characterized in that**
the current through the electrical heating stage (330) is in each case activated for a specified time period (520) within a specified cycle frame;
the specified time period is a time period from a plurality of time periods (520) stored in a non-volatile memory (410); and
in the non-volatile memory (410) each power stage of a plurality of specified power stages (510) is assigned a time period for the activation of the electrical heating stage (330).

**Revendications**

1. Dispositif de chauffage électrique pour le chauffage de fluides pour véhicules automobiles, en particulier des véhicules à entraînement électrique, dans lequel le dispositif de chauffage comprend :

> un étage de chauffage électrique (330) comportant un ou plusieurs éléments de chauffage ; et
> un dispositif de commande (230, 320) pour le réglage fin d'une puissance de chauffage par une modulation du courant s'écoulant à travers les étages de chauffage (330) ;
> **caractérisé**

**par** une mémoire non volatile (410) pour stocker une table d'allocation (500), qui alloue à chaque niveau de puissance d'une pluralité de niveaux de puissance prédéterminés (510) une durée (520) pour la commande de l'étage de chauffage électrique (330) ; et en ce que

le dispositif de commande (230, 320) pour le réglage de la puissance de chauffage de l'étage de chauffage électrique (330) active le courant passant par l'étage de chauffage électrique (330) pour ladite durée allouée (520) dans la table d'allocation (500) à un niveau de puissance (510) dans une trame de phase prédéterminée.

2. Dispositif de chauffage électrique selon la revendication 1, dans lequel la dépendance entre la durée (520) stockée dans la table d'allocation (500) et les valeurs de puissance des niveaux de puissance associés (510) du premier étage de chauffage électrique n'est pas linéaire.

3. Dispositif de chauffage électrique selon la revendication 1 ou 2, dans lequel la durée (520) dans la table d'allocation (500) est fournie sous forme d'un rapport cyclique en pourcentage de la durée de la trame de phase prédéterminée.

4. Dispositif de chauffage électrique selon l'une des revendications 1 à 3, comprenant en outre

un ou plusieurs étages de chauffage électrique additionnels (335) comportant chacun au moins un élément de chauffage ;

dans lequel la puissance de chauffage des étages de chauffage électrique additionnels (335) ne peut être commutée chaque fois qu'entre une puissance nulle et une puissance maximale, et

la puissance de chauffage peut être réglée par le dispositif de commande (230, 320) séparément pour chacun des étages de chauffage électrique (330, 335) via le courant qui traverse les étages de chauffage.

5. Dispositif de chauffage électrique selon l'une des revendications 1 à 5, dans lequel la mémoire non volatile (410) est une mémoire morte programmable, préférablement une mémoire EEPROM.

6. Dispositif de chauffage électrique selon l'une des revendications 1 à 5, comprenant en outre :

un dispositif pour mesurer le courant de chauffage total (360) traversant le dispositif de chauffage ; et

un dispositif de calcul (310) pour calculer une puissance de chauffage momentanée à partir du courant de chauffage total mesuré (360) et d'une tension de bord (350) du véhicule automobile ;

dans lequel la puissance de chauffage à régler par le dispositif de commande (230, 320) est réajustée sur base de la puissance de chauffage momentanée et d'une valeur de consigne (370).

7. Dispositif de chauffage électrique selon la revendication 6, dans lequel le dispositif pour mesurer le courant de chauffage total (360) comporte un capteur à effet Hall (400).

8. Dispositif de chauffage électrique selon la revendication 6 ou 7, comprenant en outre une autre mémoire non volatile (410) dans laquelle est enregistrée la tension de bord (350) sous forme d'une valeur fixe prédéterminée.

9. Dispositif de chauffage électrique selon la revendication 8, dans lequel l'autre mémoire non volatile (410) est une mémoire morte programmable, préférablement une mémoire EEPROM.

10. Dispositif de chauffage électrique selon la revendication 6 ou 7, dans lequel la tension de bord (350) est fournie au dispositif de chauffage sous forme d'une annonce via une interface de communication du véhicule automobile.

11. Dispositif de chauffage électrique selon la revendication 10, dans lequel l'interface de communication est un bus du véhicule.

12. Dispositif de chauffage électrique selon la revendication 6 ou 7, dans lequel la tension de bord (350) est mesurée dans le dispositif de chauffage.

13. Dispositif de chauffage électrique selon l'une des revendications 6 à 12, comprenant en outre un comparateur (310) pour déterminer une déviation momentanée de la puissance de chauffage par rapport à la valeur de consigne (370) ;

dans lequel le réajustement minimise la déviation momentanée de la puissance de chauffage par rapport à la valeur de consigne (370).

14. Dispositif de chauffage électrique selon l'une des revendications 1 à 13, dans lequel les éléments de chauffage sont des éléments de chauffage PTC.

15. Procédé de commande d'un dispositif de chauffage électrique comprenant un étage de chauffage électrique (330) avec un ou plusieurs éléments de chauffage pour chauffer des fluides d'un véhicule automobile, dans lequel la puissance de chauffage est réglée finement par modulation du courant qui traverse l'étage de chauffage (330) ;

**caractérisé en ce que**

le courant passant par l'étage de chauffage électrique (330) est activé chaque fois pour une durée prédéterminée (520) dans une trame de phase prédéterminée ;
la durée prédéterminée est une durée (520) stockée dans une mémoire non volatile (410) parmi une pluralité de mémoires, et
dans la mémoire non volatile (410), chaque niveau de puissance d'une pluralité de niveaux de puissance prédéterminés (510) est associé à une durée pour la commande de l'étage de chauffage électrique (330).

100

Fig. 1

210

220

230

Fig. 2

**Fig. 3**

350 — Bordspannung

360 — Gesamtheizstrom

370 — Leistungssollwert

310 — Steuer- und Regelelektronik

320

Heizstufen

1  2  3  4

330  335

EP 2 371 589 B1

Fig. 4

500

| Leistung | Zeitdauer |
|----------|-----------|
| 0 | 0ms |
| 94W | 50ms |
| 188W | 70ms |
| 282W | 89ms |
| 376W | 108ms |
| 470W | 125ms |
| 564W | 141ms |
| 656W | 156ms |
| 750W | 170ms |

510

520

# Fig. 5

Fig. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19845401 A1
- DE 102008056757 A1